# EUROPÄISCHE PATENTANMELDUNG

(11) **EP 2 383 100 A2**
(43) Veröffentlichungstag der Anmeldung: **02.11.2011**
(21) Anmeldenummer: 11159414.9
(22) Anmeldetag: 23.03.2011
(51) Int. Cl.: B29C 49/12, B29C 49/42, B29C 49/06

(54) **Streckblasmaschine**

(30) Priorität: 27.04.2010 DE 102010028254
(71) Anmelder: Krones AG, 93073 Neutraubling (DE)
(72) Erfinder: Weiß, Johannes, 93149, Nittenau (DE)
(74) Vertreter: Grünecker, Kinkeldey, Stockmair & Schwanhäusser

(57) **Zusammenfassung**

In einer Streckblasmaschine mit zumindest einer Blasstation, in der zum elektrischen Recken wenigstens eine Reckstange (4) mit einer einen elektrischen Servomotor (M) aufweisenden Antriebseinheit (A) gekoppelt ist und die Reckstange (4) in einer definierten, zumindest in etwa axialen Richtung wechselbar ist, ist eine zwischen einer zentrierten Betriebsstellung und einer Wechselstellung umstellbare Reckstangen-Schnellwechselvorrichtung vorgesehen.

## Beschreibung

Die Erfindung betrifft eine Streckblasmaschine gemäß Oberbegriff des Patentanspruchs 1.

Bei einer aus DE 10 325 229 A bekannten Streckblasmaschine ist zur Positionierung der Reckstange beim elektrischen Recken ein elektrischer Linearantrieb vorgesehen. Um die Reckstange wechseln zu können, muss der elektrische Linearantrieb demontiert werden.

Bei der aus WO 2006/108380 A bekannten Streckblasmaschine wird die Reckstange von einem elektrischen Linearmotor und zusätzlich von einem Fluidantrieb positioniert. Die Reckstange ist in einem Reckschlitten gehaltert. Zwischen der Reckstange und entweder einem Verlängerungselement oder einem Läufer des Linearmotors ist eine lösbare Kopplung vorgesehen. Ein Reckstangenwechsel erfordert zeitaufwändige Umrüstarbeiten.

Bei der aus DE 10 2005 045 942 A bekannten Streckblasmaschine wird die Reckstangenbewegung kurvengesteuert, wobei zusätzlich eine elektrische Positionierung vorgenommen werden kann. Am Reckschlitten ist eine Kupplungseinrichtung angeordnet.

Bei der aus EP 1 694 492 A bekannten Streckblasmaschine ist die Reckstange mit dem Reckschlitten über eine Bajonettkupplung lösbar verbunden. Die Reckstange wird mittels Nockensteuerung des Reckschlittens positioniert. Der Reckschlitten weist ein hohles Gehäuse auf, in welches ein an der Reckstange montierter Kopfteil mit zwei Ohren linear einschiebbar und durch eine Drehbewegung um die Reckstangenachse verriegelbar ist. Die Handhabung ist hierbei aufwändig.

Weiterer Stand der Technik ist zu finden in DE 10 2007 049 283 A, DE 10 2007 008 023 A, DE 60 2004 007 292 T, WO 2010/057325 A und WO 2007/020355 A.

Der Erfindung liegt die Aufgabe zugrunde, eine Streckblasmaschine der eingangs genannten Art zu schaffen, bei der trotz der den Bewegungsweg der Reckstange bei einem Reckstangenwechsel blockierenden oder beschränkenden Antriebseinheit mit dem elektrischen Servomotor für das elektrische Recken jederzeit ein komfortabler Reckstangenwechsel durchführbar ist.

Die gestellte Aufgabe wird mit den Merkmalen des Patentanspruchs 1 gelöst.

Die Reckstangen-Schnellwechselvorrichtung ermöglicht, so bald sie in die Wechselstellung umgestellt worden ist, einen jederzeitigen und komfortablen Reckstangenwechsel, obwohl die Antriebseinheit und/oder der Servomotor für das elektrische Recke in der Betriebsstellung den Bewegungsweg der Reckstange beim Wechsel blockieren oder zumindest beschränken.

Bei einer zweckmäßigen Ausführungsform ist zum Umstellen der Reckstagen- Schnellwechselvorrichtung in die Wechselstellung die Kopplung trennbar ausgebildet, und ist die Antriebseinheit mit dem elektrischen Servomotor zumindest in einem der Kopplung benachbarten Bereich aus dem Bewegungsweg der Reckstange in Wechselrichtung heraus verlagerbar montiert. Bei der Umstellung der Reckstangen-Schnellwechselvorrichtung in die Wechselstellung wird durch Trennen der Kopplung nicht nur die Reckstange zum Wechsel freigesetzt, sondern auch die Antriebseinheit mit dem Servomotor aus dem Bewegungsweg der Reckstange heraus verlagert, so dass die Reckstange komfortabel gewechselt werden kann. Die funktionelle Kombination der trennbaren Kopplung und der verlagerbaren Antriebseinheit beseitigt somit auf baulich einfache Weise die an sich bei einer für das elektrische Recken ausgelegten Blasstation gegebene Beeinträchtigung durch die Antriebseinheit mit dem elektrischen Servomotor.

Bei einer zweckmäßigen Ausführungsform ist die Reckstangen-Schnellwechselvorrichtung manuell umstellbar, gegebenenfalls sogar ohne Hilfswerkzeuge. Alternativ ist auch eine teilweise manuelle und teilweise aktorbetätigte Umstellung möglich, oder sogar eine vollautomatisch fernbetätigte Aktorbetätigung der Umstellung, so dass die Reckstange zum komfortablen Wechseln sehr rasch und gut zugänglich freigesetzt wird.

Günstig ist es, wenn die Antriebseinheit mit dem Servomotor an einem Lagerbock der Blasstation verlagerbar montiert ist. Der Lagerbock kann eine Linearführung für einen Reckschlitten aufweisen, an welchem die Reckstange wechselbar gehaltert ist. Die Verlagerung kann durch Klappen oder Schwenken oder Verschieben vorgenommen werden, wobei diese Bewegungsabläufe gegebenenfalls auch kombinierbar sind. Die die Verlagerung ermöglichende Montage der Antriebseinheit mit dem Servomotor ist zweckmäßig so ausgeführt, dass die verlagerte Antriebseinheit mit dem Servomotor nach wie vor am Lagerbock verbleibt, und demzufolge nicht gänzlich abmontiert zu werden braucht.

Bei einer zweckmäßigen Ausführungsform ist am Lagerbock eine durch eine lösbare Sicherungseinrichtung gegen Klappen und/oder Schwenken und/oder Verschieben der Antriebseinheit gesicherte Montageeinrichtung für die Antriebseinheit vorgesehen, vorzugsweise eine relativ zur Achsrichtung der Reckstange und damit zum Bewegungsweg der Reckstange beim Wechsel parallele oder senkrechte oder schräge Klappachse für die Antriebseinheit beziehungsweise dem Servomotor. Dies ermöglicht eine geführte Verlagerungsbewegung zum komfortablen Reckstangenwechsel. Die Klappachse und die Sicherungseinrichtung fixieren gemeinsam in der Betriebsstellung die Antriebseinheit mit dem Servomotor so stabil, dass die relativ hohen Reaktionskräfte aus der Reckstangenpositionierung sicher in den Lagerbock eingeleitet werden.

Bei einer zweckmäßigen Ausführungsform ist die Kopplung in der Betriebsstellung zentriert und spielfrei, so dass bei der Reckstangenpositionierung kein verfälschendes Spiel auftreten kann.

In einer zweckmäßigen Ausführungsform ist in der Betriebsstellung die Reckstange im Reckschlitten in einer Konushalterung platziert, die eine stabile und zentrierte Positionierung der Reckstange vornimmt. An der Antriebseinheit und am Reckschlitten sind aufeinander ausgerichtete, stutzenförmige Außenkonusstücke angeordnet, zwischen denen in der Betriebsstellung ein Reckstangen-Kopfteil mittels eines an beiden Außenkonusstücken angreifenden, lösbaren Spannelements geklemmt ist. Die Zusammenwirkung zwischen der Konushalterung im Reckschlitten, dessen linearer Führung, und der Klemmung der Außenkonusstücke über das Spannelement sichern die erforderliche zentrierte und spielfreie Kopplung. Dabei werden, zweckmäßig, zwischen den Außenkonusstücken und dem Spannelement konische Passflächen gegeneinander gespannt, die in einer selbsttätigen Zentrierung resultieren.

Zweckmäßig ist bei geklemmtem Reckstangen-Kopfteil zumindest ein elastisches Zwischenglied zwischen dem Reckstangen-Kopfteil und zumindest einem Außenkonusstück komprimiert. Dieses elastische Zwischenglied kann ein Elastomerring sein, der in komprimiertem Zustand eine für die Zentrierung und Spielfreiheit günstige Vorspannung erzeugt. Andererseits begünstigt das elastische Zwischenglied nach Lösen des Spannelementes gegebenenfalls ein Freisetzen der Reckstange in der Konushalterung des Reckschlittens, so dass die Reckstange mühelos gewechselt werden kann.

In einer baulich einfachen Ausführungsform ist das Spannelement ein zumindest zweiteiliger Schnellspannring, der mittels seines Übertotpunkt-Spannbügels geschlossen wird und sich unter betriebsbedingten Vibrationen oder Kräften nicht selbsttätig zu lösen vermag. Der Übertotpunkt-Spannbügel erzeugt zum Beispiel in Zusammenwirkung mit dem elastischen Zwischenglied die notwendige Vorspannung für die einwandfreie Zentrierung und Spielfreiheit.

Bei einer baulich einfachen Ausführungsform ist der Reckstangen-Kopfteil eine auf dem Reckstangenende montierte Scheibe, und ist das Spannelement, vorzugsweise, direkt an der Scheibe montiert. Das Spannelement wird beim Reckstangenwechsel mit der Reckstange entfernt. Alternativ könnte das Spannelement auch an der Antriebseinheit oder dem Reckschlitten verbleibend angebracht sein.

Um eine ungehinderte Zugangsmöglichkeit zum Reckstangenwechsel in der Wechselstellung sicher zu stellen, ist die Antriebseinheit mit dem Außenkonusstück aus der Betriebsposition um mindestens den halben Außendurchmesser des Außenkonusstücks in eine seitliche Wechselposition relativ zur Reckstangenachse verlagerbar. Zweckmäßig wird die Antriebseinheit sogar noch weiter weg verlagert, um auch seitlich bequemen Zugriff zum Reckstangen-Kopfteil freizumachen.

Bei einer zweckmäßigen Ausführungsform ist zum elektrischen Recken der Servomotor ein Linearmotor mit einem in der Betriebsposition zur Reckstangenachse koaxialen oder um maximal 100 mm zur Seite versetzten Läufer. Der Läufer ist direkt oder über eine Verlängerung mit der Reckstange gekoppelt, wenn das Spannelement geschlossen ist. Eine koaxiale Platzierung des Linearmotors vermeidet unerwünschte Klemmkräfte zwischen dem Reckschlitten und der Linearführung. Selbst bei einer seitlichen Versetzung des Läufers bis maximal 100 mm sind die seitlichen Kräfte zwischen dem Reckschlitten und der Linearführung nur moderat. In jedem Fall wird durch die Verlagerung der Antriebseinheit mit dem Servomotor beim Umstellen der Reckstangen-Schnellwechselvorrichtung in die Wechselstellung genügend Platz frei gemacht, um die Reckstange komfortabel wechseln zu können.

Bei einer anderen Ausführungsform ist zum elektrischen Recken der Servomotor ein Drehmotor, der mit der Reckstange über eine koaxiale oder seitlich versetzte Gewindespindel gekoppelt ist. Die Drehbewegung des Drehmotors wird über die Gewindespindel in die Linearbewegung der Reckstange zu deren Positionierung umgewandelt. Da aufgrund der hohen Kräfte angestrebt wird, die Gewindespindel koaxial oder nur geringfügig seitlich versetzt zur Reckstange zu positionieren, würde dies einen Reckstangenwechsel erschweren. Da jedoch beim Wechsel der Servomotor mit der Antriebseinheit und der Gewindespindel aus dem Bewegungsweg der Reckstange heraus verlagerbar ist, lässt sich die Antriebseinheit mit dem Servo-Drehmotor dennoch günstig in der Blasstation positionieren.

Bei einer zweckmäßigen Ausführungsform ist am Lagerbock gegenüber der Reckstange seitlich versetzt eine zumindest im Wesentlichen zur Reckstange parallele Schwenkachse angeordnet, um die die Antriebseinheit mit dem Servomotor beim Umstellen in die Wechselstellung verlagert wird, und ist die Schwenk-Sicherungseinrichtung an der der Schwenkachse in Bezug auf die Reckstange gegenüberliegenden Seite am Lagerbock montiert, so dass sie dort am Servomotor angreift und dieser in der Betriebsstellung stabil abgestützt ist.

Bei einer zweckmäßigen Ausführungsform ist am Reckschlitten angrenzend an das Außenkonusstück der Kopplung eine Medienzuführung montiert. In dieser Ausführungsform lässt sich beispielsweise, falls erforderlich, in die dann hohle Reckstange ein Arbeitsmedium oder ein anderes Medium einführen, ohne dadurch einen komfortablen Reckstangenwechsel zu behindern.

In einer zweckmäßigen Ausführungsform ist die Linearführung für den Reckschlitten eine T-förmige Schwalbenschwanzleiste am Lagerbock, auf der ein am Reckschlitten befestigter Fußteil formschlüssig geführt wird. Diese Linearführung ist wartungsarm und weitestgehend spielfrei, und unempfindlich gegen Reinigungsmedien. Teure, wartungsintensive und durch Schmiermitteleinsatz unsaubere Linearkugelführungen können entfallen, da aufgrund weniger Reibung generierender Kräfteverhältnisse lineare Gleitlager benutzt werden können. Generell kann auf Schmiermittel sogar verzichtet werden, was lebensmitteltechnische Vorteile hinsichtlich besserer Hygiene erbringt. Solche lineare Gleitführungen sind ferner leichter, schmutzbeständiger, geräuschärmer, stoßunempfindlich und vertragen sogar eine Hochdruckreinigung.

Bei einer zweckmäßigen Ausführungsform ist der Servomotor in der Betriebsstellung zusätzlich in Bewegungsrichtung parallel zur Reckstange am Lagerbock formschlüssig verriegelt. Diese Verriegelung vermeidet Relativbewegungen des Servomotors am Lagerbock selbst unter höchsten Kräften.

Zweckmäßig ist ferner am Lagerbock eine Reckschlitten-Fangeinrichtung vorgesehen, die den Reckschlitten in der Wechselstellung gegen selbsttätige Verlagerung sichert, so bald die Kopplung getrennt und gegebenenfalls die Antriebseinheit mit dem Servomotor bereits verlagert ist. Beim Reckstangenwechsel verbleibt der Reckschlitten in der festgelegten Position, so dass beim Umstellen der Reckstangen-Wechselvorrichtung in die Betriebsstellung umgehend wieder die Kopplung zum Festlegen bereit ist. Günstig wirkt die Fangeinrichtung mit wenigstens einem Permanentmagneten, der in einer Endposition des Reckschlittens zur Wirkung kommt. Alternativ können auch andere, gegebenenfalls nur für den Reckstangenwechsel einrückbare Fangeinrichtungen für den Reckschlitten vorgesehen werden.

Der Erfindungsgegenstand wird anhand der Zeichnung erläutert. Es zeigen:
- Fig. 1: eine Perspektivansicht eines Teils einer Blasstation einer Streckblasmaschine, in einer Betriebsstellung,
- Fig. 2: einen Längsschnitt zu Fig. 1,
- Fig. 3: eine Teilschnittdarstellung in der Schnittebene III-III in Fig. 2,
- Fig. 4: eine Perspektivdarstellung eines Details einer Reckstangen-Schnellwechselvorrichtung,
- Fig. 5: eine Ansicht, ähnlich der von Fig. 1, mit geänderter Blickrichtung, und in der Betriebsstellung, und
- Fig. 6: eine Ansicht, ähnlich der von Fig. 5, jedoch nach Umstellung der Reckstangen-Schnellwechselvorrichtung in die Wechselstellung.

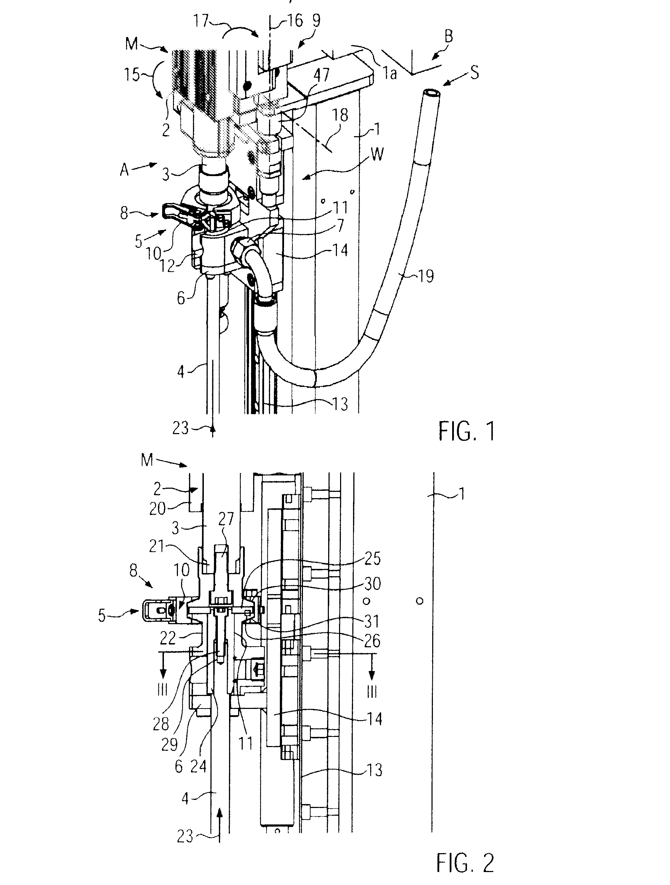

In den Fig. 1 - 6 wird ein Teil einer Blasstation S einer Streckblasmaschine B illustriert, in weichem eine Reckstangen-Schnellwechselvorrichtung W vorgesehen ist, die einerseits eine stabile, zentrierte, spielfreie und rasch lösbare Verbindung zwischen einer Antriebseinheit A mit einem Servomotor M und einer Reckstange 4 schafft, mit der Preforms in einer nicht gezeigten Blasform elektrisch reckbar sind, und andererseits trotz der wegen des Reckschlittens 6 und der Antriebseinheit gegebenen, räumlichen Beschränkung beim Wechsel der Reckstange 4 in einer gegebenen Wechselrichtung 23 jederzeit einen komfortablen und raschen Reckstangenwechsel zulässt, ohne Komponenten der Blasstation S demontieren zu müssen.

Das erfindungsgemäße Prinzip ist nicht nur für Streckblasmaschinen anwendbar, bei denen meist mehrere Blasstationen S auf einem Blasrad (nicht gezeigt) im Produktionsbetrieb relativ zu einem stehenden Teil rotieren, sondern auch für Streckblasmaschinen mit stationären Blasstationen. Ein Reckstangenwechsel wird zum Beispiel bei einer Sortenumstellung der Preforms bzw. Blasformen erforderlich, oder für den Fall, dass durch die Reckstange 4 ein Medium in die Blasform einzuführen ist, oder beispielsweise für eine so genannte Hot-Fill-Applikation. Die Reckstange 4 ist nämlich im Regelfall mit ihrem in die Blasform eintauchenden Endbereich in einer Blasdüse und/oder einem Ventilblock (nicht gezeigt), linear verschieblich geführt, und durchsetzt einen Reckschlitten 6, so dass ein Wechsel nur möglich ist, indem die Reckstange 4 weit genug an der Antriebseinheit A vorbei bewegt werden kann.

In der Blasstation S ist ein Lagerbock 1, gegebenenfalls mit einem Lagerbock-Oberteil 1a, montiert, an welchen nicht nur der Servomotor M mit der Antriebseinheit A montiert ist, sondern, in der gezeigten Ausführungsform, auch eine Linearführung 13 für den mit der Reckstange 4 im Produktionsbetrieb verschiebbaren Reckschlitten 6 angebracht ist. In den Fig. 1 - 6 wird davon ausgegangen, dass der elektrische Servomotor M ein Linearmotor 2 mit einem linear beweglichen Läufer 3 ist, der sich koaxial zur Reckstange 4 erstreckt und mit der Reckstange 4 über eine trennbare Kopplung 5 am Reckschlitten 6 verbunden ist. Alternativ (nicht gezeigt) könnte der Läufer 3 geringfügig, bis maximal etwa 100 mm, gegenüber der Reckstange 4 seitlich versetzt am Lagerbock 1 platziert sein. Ferner könnte, alternativ, zwischen dem Läufer 3 und der Reckstange 4 ein Zwischenelement vorgesehen sein.

Das erfindungsgemäße Prinzip der Reckstangen-Schnellwechselvorrichtung W ist jedoch auch für Streckblasmaschinen anwendbar, bei denen in der Blasstation S als elektrischer Servomotor M ein Drehmotor vorgesehen ist, der beispielsweise über eine Schraubspindel die Reckstangenbewegung steuert, wobei die Schraubspindel entweder koaxial zur Reckstange 4 oder etwas seitlich gegenüber dieser versetzt platziert sein könnte. Die Schraubspindel wird hierbei zweckmäßig ebenfalls am Lagerbock 1 abgestützt (nicht gezeigt).

In Fig. 1 ist als Option am Reckschlitten 6 ein Medienzufuhranschluss 7 montiert, mit dem in bestimmten Applikationen durch die dann hohle Reckstange 4 ein Medium in den Preforms bzw. die Blasform einbringbar ist. Der Medienzufuhranschluss 7 wird beispielsweise über einen mit dem Reckschlitten 6 mit bewegbaren Druckschlauch 19 gespeist.

Die Reckstangen-Schnellwechselvorrichtung W umfasst im Wesentlich zwei Komponentengruppen, nämlich ein die Kopplung 5 bildendes Clamp-System 8, das in gelöstem Zustand eine relative Bewegung der Antriebseinheit A mit dem Servomotor M relativ zur Reckstange 4 ermöglicht, und eine Montagevorrichtung 9, die in gelöstem Zustand des Clamp-Systems 8 eine Verlagerung der Antriebseinheit A mit dem Servomotor M am Lagerbock 1 aus dem Wechsel-Bewegungsweg der Reckstange 4 ohne Demontage irgendwelcher Komponenten gestattet.

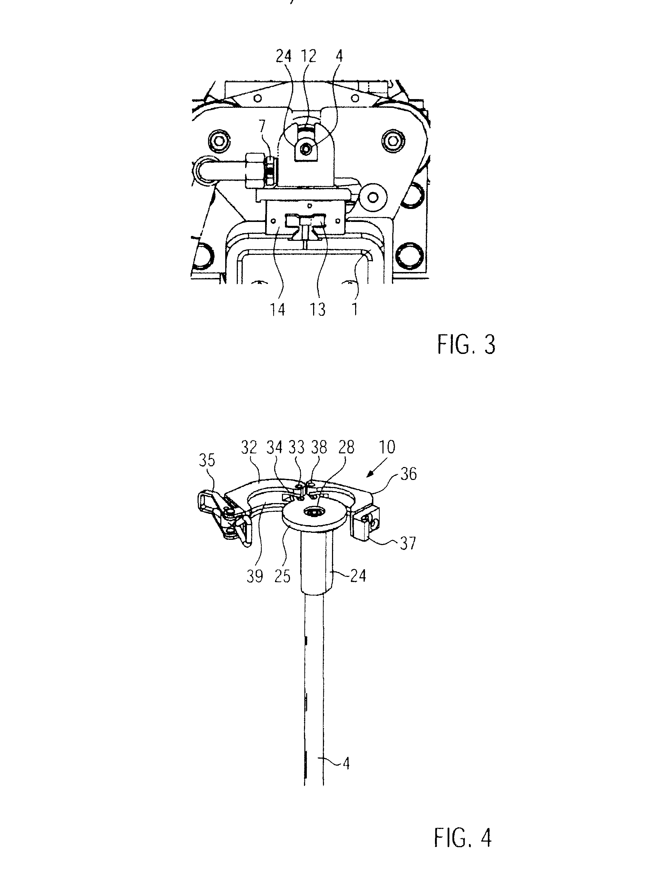

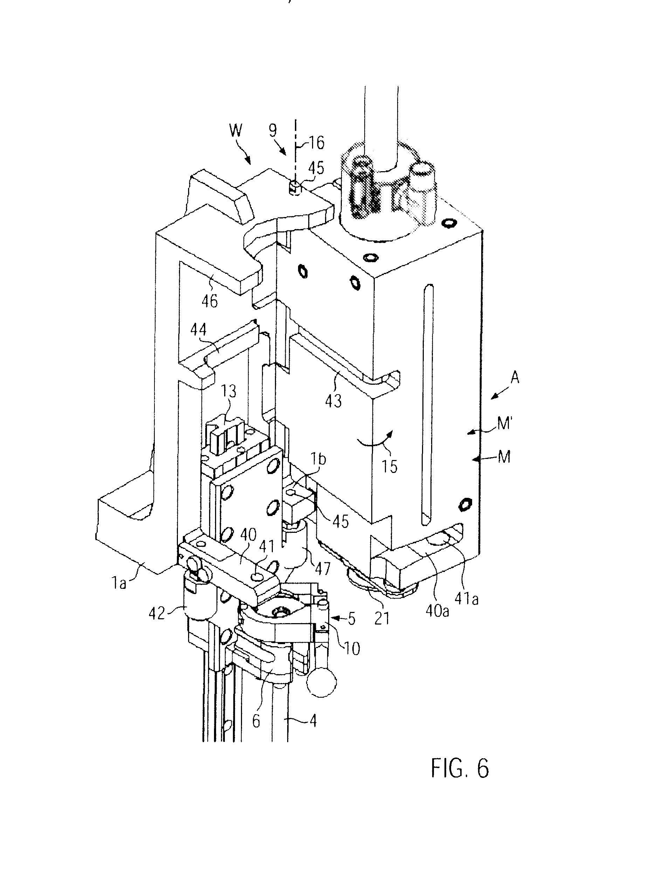

Ein wichtiger Teil des Clamp-Systems 8 ist ein Spannelement 10 zum trennbaren Koppeln, hier des Reckschlittens 6 mit dem Läufer 3, das im Detail anhand der Fig. 2 und 4 erläutert wird. im Reckschlitten 6 ist eine Konushalterung 11 zum spielfreien Positionieren eines oberen Endes 29 (Fig. 2) der Reckstange 4 im Reckschlitten 6 enthalten, wobei, zweckmäßig, der Reckschlitten 6 an der vom Lagerbock 1 wegweisenden Seite geschlitzt (Schlitz 12) ist. Der Reckschlitten 6 ist mit einem Fußteil 14 verbunden, der auf der Linearführung 13 formschlüssig geführt ist. Die Montagevorrichtung 9 definiert beispielsweise eine Schwenkachse 16, die sich in der gezeigten Ausführungsform seitlich versetzt gegenüber der Reckstange 4 am Lagerbock 1 beziehungsweise am Lagerbockoberteil 1 a erstreckt, und um welche die Antriebseinheit A mit dem Servomotor M in Richtung eines Pfeiles 15 aus der in Fig. 1 gezeigten Betriebsstellung in eine Wechselstellung (Fig. 6) verlagerbar ist, um den Bewegungsweg der Reckstange 4 in der vorgegebenen Wechselrichtung 23 freizugeben. Die Schwenkachse 16 erstreckt sich zum Beispiel bis in eine am Lagerbock 1 beziehungsweise Lagerbock-Oberteil 1 a montierte Fassung 47.

Bei einer nur angedeuteten alternativen Ausführungsform ist eine zur Reckstange 4 im Wesentlichen vertikal verlaufende Schwenkachse 18 für die Antriebseinheit A mit dem Servomotor M am Lagerbock 1 definiert, um die Antriebseinheit A mit dem Servomotor M beispielsweise in Richtung eines Pfeiles 17 aus der in Fig. 1 gezeigten Betriebsstellung in die Wechselstellung zu verlagern. Bei einer weiteren Alternative könnte eine relativ zur Reckstange 4 schräge Schwenkachse (nicht gezeigt) am Lagerbock 1 definiert sein. Ferner könnte die Antriebseinheit A mit dem Servomotor M seitlich oder schräg verschoben oder auf andere Weise am Lagerbock 1 verlagert werden.

Die Reckstangen-Schnellwechselvorrichtung W ist entweder nur manuell bedienbar, oder teilweise manuell und teilweise aktorbetätigt, oder vollautomatisch aktorbetätigt, um Umrüstzeiten bei einem Reckstangenwechsel zu verkürzen.

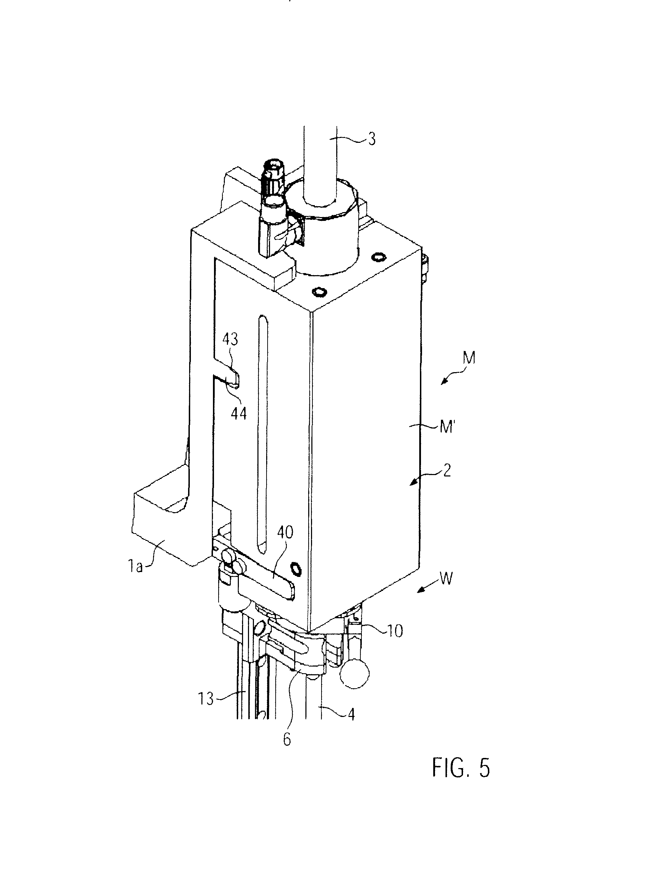

In der Ausführungsform in den Fig. 1 und 5 ist eine Schwenksicherung der Antriebseinheit A beziehungsweise des Servomotors M um die Schwenkachse 16 vorgesehen, beispielsweise mit Hilfe eines Vorsprungs 40 am Lagerbock 1 beziehungsweise Lagerbock-Oberteil 1 a, der in eine entsprechende Ausnehmung 40a im Servomotor M beziehungsweise in einem diesen aufnehmenden Kühlkörper M' in der Betriebsstellung (Fig. 5) eingreift und mittels eines Verriegelungselements 41 die Betriebsstellung sichert. Die Verriegelung 41 ist beispielsweise durch eine in Fig. 6 unten liegende Zugangsöffnung 41 a lösbar.

In Fig. 1 ist ferner am Linearmotor 2 eine Führung 20 für den Läufer 3 angedeutet, die hier am unteren Ende des Gehäuses oder Stators des Linearmotors 2 montiert ist und den Läufer 3 spielfrei linear beweglich führt.

Die schematische Längsschnittdarstellung in Fig. 2 zeigt am unteren Ende des Läufers 3 ein Außenkonusstück 21, das in Fig. 2 mittels einer Befestigungsschraube 27 fixiert (oder alternativ mit dem Läufer 1 einstückig ausgebildet) ist und eine äußere obere, kreisringförmige Konusfläche 30 aufweist. Am Reckschlitten 6 ist ein weiteres Außenkonusstück 22 angebracht, vorzugsweise einstückig, das gegebenenfalls wie der Reckschlitten 6 an der dem Lagerbock 1 abgewandten Seite längs geschlitzt ist und eine untere äußere, fast kreisringförmige Konusfläche 31 aufweist, die umgekehrt geneigt ist wie die Konusfläche 30 des Außenkonusstücks 21 am Läufer 3. Auf das obere Ende 29 der Reckstange 4 ist eine Passhülse 24 aufgeschoben, die eine Kreisringscheibe 25 als einen Reckstangen-Kopfteil trägt und mittels einer Schraube 28 fixiert (oder einstückig mit der Reckstange 4 ausgebildet) ist. Die Passhülse 24 ist in der in Fig. 2 gezeigten Betriebsstellung in der Konushalterung 11 des Reckschlittens 6 zentriert und spielfrei festgelegt. Die Kreisringscheibe 25 wird zwischen den beiden Außenkonusstücken 21, 22 geklemmt, und zwar durch das Spannelement 10, das mit inneren kreisringförmigen Konusflächen 39 (Fig. 4) an den Konusflächen 30, 31 der Außenkonusstücke 21, 22 angreift und diese relativ zueinander zentriert und gegeneinander spannt. Zwischen der Scheibe 25 und zumindest einem Außenkonusstück 22 kann, optional, ein elastisches Element 26 vorgesehen sein, vorzugsweise ein Elastomerring, das in der Betriebsstellung durch die Anzugskraft des Spannelements 10 komprimiert ist und die Spannwirkung unterstützt.

Fig. 3 (Schnitt in der Ebene III-III in Fig. 2) verdeutlicht den Formschluss zwischen der Passhülse 24 und dem Reckschlitten 6, und zeigt auch den Schlitz 12 im Reckschlitten 6 (und gegebenenfalls dem Außenkonusstück 22). Die Passhülse 24 hat beispielsweise einen halbzylindrischen, an einer Umfangsseite abgeflachten Querschnitt, passend zur Konushalterung 11 des Reckschlittens 6, beispielsweise um die Reckstange 4 mit der Scheibe 25 in einer vorbestimmten Drehorientierung im Reckschlitten 6 positionieren zu können. Der Fußteil 14 des Reckschlittens 6 ist passend zu der Linearführung 13 ausgebildet und wird beispielsweise über wartungsfreie und schmierstofffreie Linear-Gleitlager (nicht gezeigt) auf der Linearführung 13 geführt. Diese Linear-Gleitlager können im Fußteil 14 und/oder an der Linearführung 13 vorgesehen sein. Die Linearführung 13 ist beispielsweise eine mit einem geschweiften Fußteil am Lagerbock 1 verschraubte T-förmige Leiste, so dass insgesamt eine Art Schwalbenschwanzführung gegeben ist.

Fig. 4 verdeutlicht eine Ausführungsform der Reckstange 4 mit der darauf mittels der Spannschraube 28 fixierten Passhülse 24 und der Scheibe 25. Das Spannelement 10 ist bei dieser Ausführungsform an einer Umfangsposition an der Scheibe 25 montiert und nach Art eines Spannrings mit einem Übertotpunkt-Spannbügel 35 ausgebildet und zumindest zweiteilig. Eine erste Spannbügelhälfte 32 ist mittels eines Schwenkbolzens 33 an einem Umfangsvorsprung 34 der Scheibe 25 schwenkbar angeordnet und trägt den Übertotpunkt-Spannbügel 35. Daneben ist eine zweite Spannbügelhäfte 36 mit einem Schwenkzapfen 38 montiert. Die zweite Spannbügelhälfte 36 trägt ein Widerlager 37 für den Übertotpunkt-Spannbügel 35. Innen ist, wie erwähnt, jede Spannbügelhälfte 32, 36 mit Konusflächen 39 ausgebildet, die zu den Konusflächen 30, 31 der Außenkonusstücke 21, 22 in Fig. 2 passen, um diese spielfrei und zentriert die Scheibe 25 zu spannen.

Bei einer nicht gezeigten, alternativen Ausführungsform könnte das Spannelement 10 anders ausgebildet sein und/oder am Außenkonusstück 21 oder 22 angebracht werden. Ferner ist es möglich, das Spannelement 10 als eine eigenständige Komponente auszubilden, die bei einem Reckstangenwechsel abgenommen und danach wieder angebracht wird.

Die Fig. 5 und 6 verdeutlichen die Umstellung der Reckstangen-Schnellwechselvorrich-tung W zwischen der Betriebsstellung (Fig. 5) und der Wechselstellung (Fig. 6) anhand des Ausführungsbeispiels, in welchem der Servomotor M ein Linearmotor 2 ist.

In Fig. 6 wird die Schwenkachse 16 durch Schwenkzapfen 45 in einem abgebogenen Oberteil 46 des Lagerbock-Oberteils 1a und der Fassung 47 am Lagerbock-Oberteil 1a definiert. Um diese Schwenkachse 16 ist der Servomotor M in Richtung des Pfeils 15 in die Wechselstellung geschwenkt worden. Die Schwenksicherung mit dem Fortsatz 40 und der Verriegelung 41 ist in Fig. 6 aus der Vertiefung 40a ausgetreten, nachdem die Verriegelung 41 beispielsweise durch die Öffnung 41a gelöst wurde, so dass der Servomotor M der Antriebseinheit A um etwa 90 ° verschwenkt werden konnte, d. h., in jedem Fall um ein Bogenmaß mindestens entsprechend dem Außendurchmesser des Außenkonusstücks 21, um das Spannelement 10 vollständig freizulegen, das in Fig. 6 in geschlossenem Zustand gezeigt ist. Damit das Außenkonusstück 21 unbehindert aus dem Spannelement 10 austreten kann, sind zuvor die Spannbügelhälften 32, 36 auseinander geschwenkt worden.

Zur Axialsicherung des Servomotors M in der Betriebsstellung in Fig. 5 dient nicht nur der Oberteil 46, der oben über den Servomotor M greift, sondern auch der Vorsprung 40, der in die Vertiefung 40a eingreift, sowie, vorzugsweise, eine Rippe 44 am Lagerbock-Oberteil 1a, die in eine entsprechende Vertiefung 43 eingreift. Mit diesen Maßnahmen werden die bei der Positionierung der Reckstange 4 entstehenden Reaktionskräfte, die vorwiegend in Richtung der Achse der Reckstange 4 wirken, großflächig in den Lagerbock 1 beziehungsweise Lagerbock-Oberteil 1 a übertragen.

Damit in der Wechselstellung in Fig. 6 und nach dem Trennen der Kopplung 5 der Reckschlitten 6 mit der Reckstange 4 nicht unter dem Eigengewicht auf der Linearführung 13 absinkt, ist zweckmäßig eine Fangvorrichtung 42 vorgesehen, die den Reckschlitten 6 beim Reckstangenwechsel hält. Dies ist beispielsweise zumindest ein Permanentmagnet, der in einer zuvor eingestellten oberen Endstellung des Reckschlittens 6 an diesem magnetisch wirkt, oder ein nicht gezeigter Verriegelungsanschlag, der nach erfolgtem Reckstangenwechsel wieder gelöst wird. Bei der Umstellung aus der Betriebsstellung (Fig. 5) in die Wechselstellung (Fig. 6) ist natürlich zunächst das Spannelement 10 so weit geöffnet, dass das Außenkonusstück 21 am Läufer 3 in Richtung des Pfeils 15 unbehindert auszutreten vermag.

Zu einem Reckstangenwechsel wird in Fig. 5 zunächst das Spannelement 10 geöffnet, bis das Außenkonusstück 21 zum Austritt freigesetzt ist. Dann wird die Schwenksicherung 40, 41 gelöst und wird der Servomotor M beziehungsweise die Antriebseinheit A in Richtung des Pfeils 15 in die Wechselstellung (Fig. 6) verschwenkt. Beim Lösen des Spannelements 10 kann gegebenenfalls das elastische Element 26 die Scheibe 25 mit der Reckstange 4 in der Konushalterung 11 des Reckschlittens etwas anheben, so dass die Reckstange 4 zur Entnahme in Wechselrichtung 23 frei ist. Anderenfalls wird beispielsweise durch den Schlitz 12 des Reckschlittens 6 an der Passhülse 24 angegriffen, um die (gegebenenfalls leicht konische) Passhülse 24 aus ihrer zentrierten Lage geringfügig anzuheben und die Reckstange 4 freizusetzen. Dann wird die Reckstange 4 beispielsweise mittels des Spannelements 10 nach oben gezogen, bis sie mit ihrem unteren Ende frei kommt und seitlich entnommen werden kann. Nachfolgend wird eine andere Reckstange 4 eingeführt, die mit der gleichen Passhülse 24 und Scheibe 25 ausgestattet ist. Diese wird bei geöffnetem Spannelement 10 zunächst bis auf das Außenkonusstück 22 am Reckschlitten 6 nach unten geschoben und mit der Scheibe 25 auf das elastische Element 26 aufgelegt. Nachfolgend wird der Servomotor M aus der Wechselstellung (Fig. 6) entgegengesetzt zum Pfeil 15 um die Schwenkachse 16 wieder in die Betriebsstellung geschwenkt (Fig. 5) und mit der Schwenksicherung 40, 41 festgelegt, wobei das untere Ende des Außenkonusstücks 21 in das geöffnete Spannelement 10 eintritt und zunächst lose mit dem Außenkonusstück 22 ausgerichtet ist. Durch Schließen des Spannelements 10 werden die beiden Außenkonusstücke 21, 22 spielfrei relativ zueinander präzise zentriert und auf die Scheibe 25 aufgepresst, wobei das elastische Element 26, falls vorgesehen, komprimiert wird, bis schließlich der hinter dem Widerlager 37 eingehängte Übertotpunkt-Spannbügel (Fig. 4) geschlossen wird, und die spielfreie Zentrierung wieder herstellt. Dann ist die Blasstation für den Produktionsbetrieb funktional wieder einsatzfähig.

Im Falle eines Servomotors M als Drehmotor, der über eine im Lagerbock 1, 1 a abgestützte Schraubspindel zum Beispiel mit dem Reckschlitten 6 gekoppelt ist, werden der Drehmotor und die Schraubspindel in die Wechselstellung auf dem Bewegungsweg in der Wechselrichtung 23 der Reckstange 4 aus deren Bewegungsweg heraus verlagert (nicht gezeigt).

Falls der Servomotor M mit einem Pneumatikzylinder oder einem Kraftspeicher kombiniert sein sollte, um Belastungsspitzen zu kompensieren, wird gegebenenfalls auch der Kraftspeicher oder Pneumatikzylinder zusammen mit dem Servomotor in die Wechselstellung verlagert. Als weitere Option könnte eine Drehverrastung vorgesehen sein, um den Servomotor M in der Wechselstellung (Fig. 6) vorübergehend festzusetzen, beispielsweise zwischen dem Oberteil 46 und dem oberen Ende des Servomotors M beziehungsweise des Kühlkörpers M'. Falls die Reckstangen-Schnellwechselvorrichtung W automatisch aktorbetätigt ausgebildet ist, könnten entsprechende Aktoren für das Lösen des Spannelements 10 und/oder das Entriegeln der Schwenksicherung 40, 41 und Verschwenken des Servomotors M beispielsweise am Lagerbock vorgesehen sein, zum Beispiel Pneumatikzylinder oder dergleichen, so dass ein Reckstangenwechsel ferngesteuert vorbereitet werden kann.

## Patentansprüche

1. Streckblasmaschine zum Herstellen von Behältern aus Preforms, mit zumindest einer Blasstation (S), in der zum elektrischen Recken des Preforms wenigstens eine Reckstange (4) mit einer einen elektrischen Servomotor (M) aufweisenden Antriebseinheit (A) zur linearen Bewegungsübertragung gekoppelt ist, und die Reckstange (4) in einer definierten, zumindest in etwa axialen Richtung (23) wechselbar ist, **dadurch gekennzeichnet, dass** in der Blasstation (5) eine zwischen einer zentrierten Betriebsstellung und einer Wechselstellung umstellbare Reckstangen-Schnellwechselvorrichtung (W) vorgesehen ist.

2. Streckblasmaschine nach Anspruch 1, **dadurch gekennzeichnet, dass** zum Umstellen in die Wechselstellung die Kopplung (5) trennbar ausgebildet und die Antriebseinheit (A) zumindest in einem der Kopplung (5) benachbarten Bereich aus dem Bewegungsweg der Reckstange (4) in Wechselrichtung (23) heraus verlagerbar montiert ist.

3. Streckblasmaschine nach Anspruch 1, **dadurch gekennzeichnet, dass** die Reckstangen-Schnellwechselvorrichtung (W) entweder manuell oder teilweise manuell und teilweise aktorbetätigt oder automatisch aktorbetätigt umstellbar ist.

4. Streckblasmaschine nach wenigstens einem der vorhergehenden Ansprüche, **dadurch gekennzeichnet, dass** die Antriebseinheit (A) mit dem Servomotor (M) an einem, vorzugsweise eine Linearführung (13) für einen Reckschlitten (6) aufweisenden, Lagerbock (1, 1 a) der Blasstation (S) verlagerbar montiert ist, vorzugsweise klappbar und/oder schwenkbar und/oder verschiebbar.

5. Streckblasmaschine nach Anspruch 4, **dadurch gekennzeichnet, dass** am Lagerbock (1, 1 a) eine durch eine lösbare Sicherungseinrichtung (40, 41) gegen Klappen, Schwenken oder Verschieben gesicherte Montageeinrichtung (9) für die Antriebseinheit (A) vorgesehen ist, vorzugsweise mit einer relativ zur Achsrichtung der Reckstange (4) parallelen oder senkrechten oder schrägen Schwenkachse (16).

6. Streckblasmaschine nach Anspruch 1, **dadurch gekennzeichnet, dass** in der Betriebsstellung die Reckstange (4) im Reckschlitten (6) in einer Konushalterung (11) platziert ist, und dass an der Antriebseinheit (A) und am Reckschlitten (6) aufeinander ausgerichtete, stutzenförmige Außenkonusstücke (21, 22) angeordnet sind, zwischen denen ein Reckstangen-Kopfteil mittels eines an beiden Außenkonusstücken angreifenden, lösbaren Spannelements (10) geklemmt ist, wobei, vorzugsweise, die Antriebseinheit (A) mit dem Außenkonusstück (21) aus der Betriebsstellung um mindestens den halben Außendurchmesser des Außenkonusstücks (21) in eine seitliche Wechselposition relativ zur Reckstangen-Achse verlagerbar ist.

7. Streckblasmaschine nach Anspruch 6, **dadurch gekennzeichnet, dass** bei geklemmtem Reckstangen-Kopfteil zumindest ein elastisches Zwischenglied (26), vorzugsweise ein Elastomerring, zwischen dem Reckstangen-Kopfteil und einem Außenkonusstück (21, 22) geklemmt ist.

8. Streckblasmaschine nach Anspruch 6, **dadurch gekennzeichnet, dass** das Spannelement (10) ein zumindest zweiteiliger Schnellspannring mit Übertotpunkt-Spannbügel (35) ist.

9. Streckblasmaschine nach Anspruch 6, **dadurch gekennzeichnet, dass** der Reckstangen-Kopfteil eine auf dem Reckstangenende (29) montierte Scheibe (25) aufweist, vorzugsweise an einer auf das Reckstangenende (29) aufgesteckten, in die Konushalterung (11) des Reckschlittens (6) passenden Passhülse (24), und dass, vorzugsweise, das Spannelement (10) an der Scheibe (25) montiert ist.

10. Streckblasmaschine nach wenigstens einem der vorhergehenden Ansprüche, **dadurch gekennzeichnet, dass** der Servomotor (M) ein Linearmotor (2) mit einem in der Betriebsposition zur Reckstangen-Achse koaxialen oder nur maximal 100 mm zur Seite versetzten Läufer (3) ist, der direkt oder über eine Verlängerung mit der Reckstange (4) bzw. dem Reckschlitten (6) gekoppelt ist.

11. Streckblasmaschine nach wenigstens einem der Ansprüche 1 bis 9, **dadurch gekennzeichnet, dass** der Servomotor (M) ein Drehmotor und mit der Reckstange (4) bzw. dem Reckschlitten über eine koaxiale oder seitlich versetzte Gewindespindel gekoppelt ist.

12. Streckblasmaschine nach Anspruch 5, **dadurch gekennzeichnet, dass** am Lagerbock (1, 1a) eine zumindest im Wesentlichen zur Reckstange (4) parallele, gegenüber der Reckstange (4) seitlich versetzte Schwenkachse (16) für die Antriebseinheit (A) einschließlich des Servomotors (M) angeordnet ist, und dass die Schwenk-Sicherungseinrichtung (40, 41) an der der Schwenkachse (16) in Bezug auf die Reckstange (4) gegenüberliegenden Seite am Lagerbock (1, 1 a) montiert ist und am Servomotor (M) angreift.

13. Streckblasmaschine nach Anspruch 4, **dadurch gekennzeichnet, dass** die Linearführung (13) eine T-förmige Schwalbenschwanzleiste am Lagerbock (1) ist, auf der ein am Reckschlitten (6) befestigter Fußteil (14) formschlüssig geführt ist, vorzugsweise mittels Lineargleitlagern.

14. Streckblasmaschine nach wenigstens einem der vorhergehenden Ansprüche, **dadurch gekennzeichnet, dass** in der Betriebsstellung der Servomotor (M) zusätzlich in Bewegungsrichtung parallel zur Reckstange (4) am Lagerbock (1, 1a) formschlüssig verriegelt ist.

15. Streckblasmaschine nach wenigstens einem der vorhergehenden Ansprüche, **dadurch gekennzeichnet, dass** am Lagerbock (1, 1 a) eine Reckschlitten-Fangeinrichtung (42) vorgesehen ist, vorzugsweise wenigstens ein Permanentmagnet, die in einer oberen Endposition des Reckschlittens (6) bei getrennter Kopplung (5) den Reckschlitten (6) direkt oder indirekt gegen eine Bewegung entgegengesetzt zur Wechselrichtung (23) der Reckstange (4) festhält.
